# EUROPÄISCHE PATENTSCHRIFT

(11) **EP 0 552 181 B1**
(45) Veröffentlichungstag und Bekanntmachung des Hinweises auf die Patenterteilung: **07.09.1994**
(21) Anmeldenummer: 91916916.9
(22) Anmeldetag: 27.09.1991
(51) Int. Cl.: G01B 7/02, B66C 23/90

(54) **VERFAHREN UND VORRICHTUNG ZUM ERFASSEN UND ÜBERTRAGEN VON INFORMATIONEN BEI RELATIV ZUEINANDER VERFAHRBAREN ELEKTRISCHEN LEITERN OD. DGL.**
PROCESS AND DEVICE FOR ACQUIRING AND TRANSMITTING INFORMATION WITH ELECTRICAL CONDUCTORS MOVABLE RELATIVELY TO ONE ANOTHER OR THE LIKE
PROCEDE ET DISPOSITIF DE SAISIE ET DE TRANSMISSION D'INFORMATIONS AVEC DES CONDUCTEURS ELECTRIQUES OU SIMILAIRES MUTUELLEMENT MOBILES LES UNS PAR RAPPORT AUX AUTRES

(30) Priorität: 08.10.1990 DE 4031839; 08.10.1990 DE 4031840
(43) Veröffentlichungstag der Anmeldung: 28.07.1993
(73) Patentinhaber: B a r m a g AG, D-42897 Remscheid (DE)
(72) Erfinder: STIEHL-WOLF, Andreas, D-4670 Lünen (DE); SUBKE, Peter, D-4600 Dortmund 1 (DE)
(74) Vertreter: Pfingsten, Dieter, Dipl.-Ing.
(86) Internationale Anmeldenummer: EP9101852
(87) Internationale Veröffentlichungsnummer: WO9206349

(56) Entgegenhaltungen:
- DE-A- 1 803 457
- DE-A- 2 836 108
- DE-A- 3 420 596
- DE-A- 3 606 590
- GB-A- 2 136 241
- US-A- 3 833 130
- US-A- 4 368 824

## Beschreibung

Die Erfindung richtet sich auf ein Verfahren und eine Vorrichtung zum Erfassen und Übertragen von elektronischen Informationen bei relativ zueinander verfahrbaren Bauteilen, insbesondere elektrischen Leitern, Teleskopauslegern von Kränen u. dgl.

Teleskopierbare Ausleger gibt es in unterschiedlichen Gestaltungen. Ein Problem derartiger Ausleger besteht darin, die aktuelle Ausfahrlänge der teleskopierbaren Ausleger zu ermitteln. Hier muß ein vergleichsweise großer Aufwand betrieben werden. Entweder müssen Kabel über Kabeltrommeln mitgeschleppt werden oder andere Meßeinrichtungen müssen vorqesehen werden. Auch ist es wünschenswert die jeweilige Ausfahrlänge der Teleskope dem Kranführer unmittelbar mitteilen zu können, was immer dann problemlos ist, wenn Teleskopschüsse jeweils nur in voller Länge ausgefahren werden und über Endschalter ihre Ausfahrbewegung beendet wird. Hier kann dann durch die Endschalter signalisiert werden, daß ein Teleskopausleger ausgefahren oder eingefahren ist.

Längenmessungen über geschleppte Kabel, die etwa über Drehmeßgeber an Meßdosen den jeweiligen Ausfahrweg signalisieren, sind für sich gesehen bekannt, sie haben aber erhebliche Nachteile, da sie insbesondere den äußeren Einflüssen ausgesetzt sind. Die Kabel können reißen, beschädigt werden u. dgl. mehr.

Neben den hier im Vordergrund stehenden teleskopierbaren Kranauslegerschüssen gibt es auch andere relativ zueinander verfahrbare elektrische Leiter mit hydraulischen Kolben/Zylindereinheiten anderer teleskopierbarer Maschinenelemente, bewegbare Brückenteile u. dgl. mehr, deren Position mit Hilfe der vorliegenden Frfindung dann qemessen werden kann, wenn diese Elemente als elektrische Leiter aufgefaßt werden können.

Die Aufgabe der Erfindung besteht in der Schaffung einer Lösung, mit der es möglich ist, die Position eines Leiters relativ zu einem anderen Leiter exakt erfassen zu können und/ oder an jedem Bereich des elektrischen Leiters, z.B. des Teleskopauslegers, Energien einem Verbraucher zur Verfügung zu stellen, wobei gleichzeitig zusätzlich mit der gleichen Einrichtung weitere Funktionen übernommen werden können.

Mit einem Verfahren der eingangs bezeichneten Art wird diese Aufgabe gemäß der Erfindung dadurch gelöst, daß die Teile der elektrischen Leiter, wie die Kranauslegerschüsse od. dgl., elektrisch leitend miteinander derart verbunden werden, daß sich für einen an einer definierten Stelle des Leiters aufgegebenen Spannungssprung ein durchgehender elektrischer Leiter bis zum Ende der Leitung ergibt, wobei nach Aufgabe des Spannungssprunges an der Aufgabenstelle die Rückkehr der Reflektion gemessen und über die Reflektionszeit die Länge des Leiters bestimmt wird.

Die Erfindung macht sich die Erkenntnis zunutze, daß sich ein Spannungssprung in einem elektrischen Leiter in Art einer Welle fortpflanzt und ggf. am Ende reflektiert wird. Ist nämlich ein Ende einer Leitung kurzgeschlossen, kommt es zu einer Totalreflektion mit dem Reflektionsfaktor R = -1, wobei die Spannung auf der gesamten Leitung dann 0 ist. Ist die Leitung an ihrem Ende offen, so kommt es ebenfalls zu einer Totalreflektion, dort mit dem Reflektionsfaktor R = +1, was zu einer Verdoppelung der Spannung auf der gesamten Leitung führt.

Möglich ist auch, am Ende der Leitung eine Impedanz gleich dem Wellenwiderstand der Leitung anzuschließen, so daß dann die Leitung reflektionsfrei abgeschlossen ist, d.h. die Spannungswelle wird am Ende nicht reflektiert, der Reflektionsfaktor P ist dann gleich 0. Diese Zusammenhänge nutzt die Erfindung zur Längenmessung, derart, daß die entsprechenden Leiter erfindungsgemäß mit einem Spannungssprung beaufschlagt werden.

In Ausgestaltung ist zur Messung der Teleskopierlänge von Kranauslegern vorgesehen, daß als elektrischer Leiter an jedem Kranauslegerschuß eine elektrisch isolierte Leiterbahn herangezogen wird, wobei die Leiterbahn über Schleifleiter od. dgl. zu einer Gesamtleitung herangezogen und die Leitungslänge über die Reflektion eines Spannungssprunges gemessen wird.

Zweckmäßig ist es auch, wenn die Reflektion sowohl bei unteleskopierten Auslegern als auch bei vollteleskopierten Auslegern gemessen wird, diese Meßdaten gespeichert und die Reflektionswerte bei jeder Zwischenausfahrlänge gemessen, mit den zuvor ermittelten Meßgrößen verglichen und zur Definition der Ausfahrlänge umgerechnet werden.

Die Erfindung betrifft auch eine Vorrichtung zur Durchführung des erfindungsgemäßen Verfahrens zur Messung der Teleskopierlänge von Kranauslegern, wobei sich eine derartige Vorrichtung dadurch auszeichnet, daß sie als auf jedem Kranauslegerschuß angebrachte elektrisch isolierte Leiterbahn ausgebildet ist, wobei die Leiterbahnabschnitte über Schleifleiter elektrisch leitend miteinander verbunden sind, mit einem Generator zur Erzeugung eines Spannungssprunges und einer Meß- und Auswerteinrichtung zur Messung der Reflektionszeit und der Umrechnung in die entsprechende Teleskopierlänge.

Um insbesondere neben der reinen Längenmessung auch umgekehrt Energien an jeder Stelle, z.B. eines Teleskopauslegers, bereitstellen zu können, sieht die Erfindung in weiterer Ausgestaltung auch vor, daß diese Vorrichtung als auf jede am Teleskoparm angebrachte Schiene aus Leitermaterial gebildet ist mit einer elektrischen Kopplung von einer Schiene auf dem einen Teleskoparm zur jeweils benachbarten Schiene auf dem anderen Teleskoparm und zur Weiterleitung an eine Datenerfassungs- und Auswerteinrichtung.

Mit dieser erfindungsgemäßen Ausgestaltung werden gleichzeitig mehrere Problembereiche erfaßt, nämlich die Stromversorgung für Verbraucher auf den Auslegerarmen ist ebenso gewährleistet, wie eine Datenübertragung von Meßaufnehmern u. dgl. zu Auswerteinrichtungen über das gleiche System.

Neben der Stromversorgung kann erfindungsgemäß die Schiene als Datenübertragungseinheit genutzt werden, was die Vorrichtung weniger anfällig gegenüber von außen kommenden Störungen macht. Die Nachteile von ansonsten notwendigen Kabeltrommeln werden hier daher vermieden.

Wie oben schon erwähnt, sieht die Erfindung auch vor, daß die Schienen als Element einer Ausfahrlängenmeßeinrichtung an den Teleskoparmen ausgebildet sind.

Metallstreifen zum Wegmessen von Teleskoparmauslegern zu nutzen ist bekannt, beispielsweise aus der DE-36 06 590-Al. Die bekannte Vorrichtung zählt Durchbrüche auf Metallstreifen und ermittelt die Ausfahrlänge nach Anzahl der gezählten Durchbrüche.

Die vorliegende Erfindung nutzt die Möglichkeit der Ausfahrlängenmessung als weiteren Vorteil der Stromübertragungsschienen an den Auslegern.

Die Stromschienen können darüber hinaus mit Einrichtungen ausgerüstet sein zur seriellen Datenübertragung.

Es kann dabei auch vorgesehen sein, daß Meßwertaufnehmer, beispielsweise Näherungsschalter, vorgesehen sind zur Aufnahme von Impulsen bei Veränderung der Ausfahrlänge, wobei die Stromschiene selbst als Impulsgeber gestaltet sein kann. Wesentlich ist dabei, daß die aufgenommenen Impulse unmittelbar über die Stromschiene selbst zur Verwertungseinrichtung leitbar sind, d.h. hier sind andere Übertragungsmedien nicht mehr notwendig, etwa Kabel od. dgl.

In vorteilhafter Weitergestaltung sieht die Erfindung auch vor, daß Finkopplungs- bzw. Auskopplungseinrichtungen an den Schienen vorgesehen sind zur induktiven Übertragung von Informationsdaten.

Die Erfindung ist nachstehend anhand der Zeichnung beispielsweise näher erläutert. Diese zeigt in.
- Fig. 1: eine vereinfachte Darstellung eines teleskopierbaren Auslegerarmes,
- Fig. 2: eine prinzipiell elektrische Schaltung in Art eines Ersatzschaltbildes einer erfindungsgemäßen Lösung,
- Fig. 3: die Seitenansicht einer Prinzipskizze der Vorrichtung nach der Erfindung sowie in
- Fig. 4: ein Prinzip eines entsprechend gestalteten seriellen Bus-Systems.

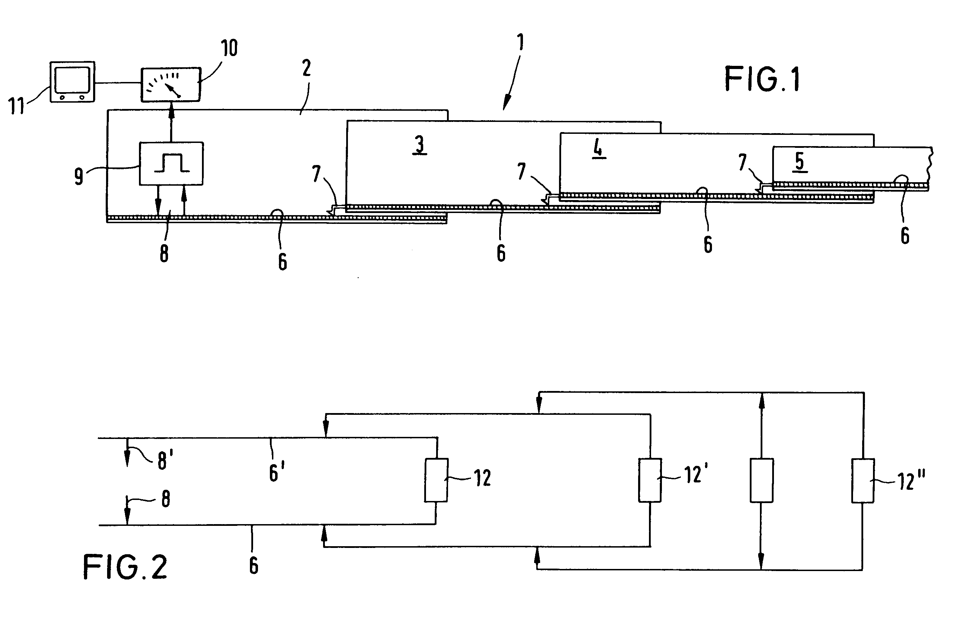

In Fig. 1 ist ein allgemein mit 1 bezeichneter Kranausleger dargestellt mit einem ersten Grundteleskop 2 und drei weiteren teleskopierbaren Kranauslegerschüssen 3, 4 und 5.

Die Kranauslegerschüsse sind insgesamt mit elektrischen Leiterbahnen, z.B. entsprechenden Stromschienen, ausgestattet, die je das Bezugszeichen 6 tragen. Diese Leiterbahnen 6 sind beispielsweise im Fall der Fig. 1 über Schleifleiter 7 elektrisch leitend miteinander verbunden.

An einer definierten Stelle des stationären Grundteleskopes 2 ist eine Einleit- bzw. Aufgabestelle 8 vorgesehen für einen Spannungssprung, erzeugt durch einen symbolisch dargestellten Generator 9. Zur Messung und Auswertung der Reflektionszeit dieses Spannungssprunges auf den Leitern 6 ist eine Meßeinrichtung, allgemein mit 10 bezeichnet, vorgesehen und zur Darstellung der sich errechneten und ermittelten Teleskopierlänge ein Anzeigegerät, allgemein mit 11 bezeichnet.

In Fig. 2 ist ein Ersatzschaltbild dargestellt mit Leiterbahnpaaren 6, 6′ mit zugeordneten Abschlußwiderständen 12, 12′, 12˝ und der Aufgabe des Eingangsimpulses 8 und der Abnahme des reflektierten Signales 8′.

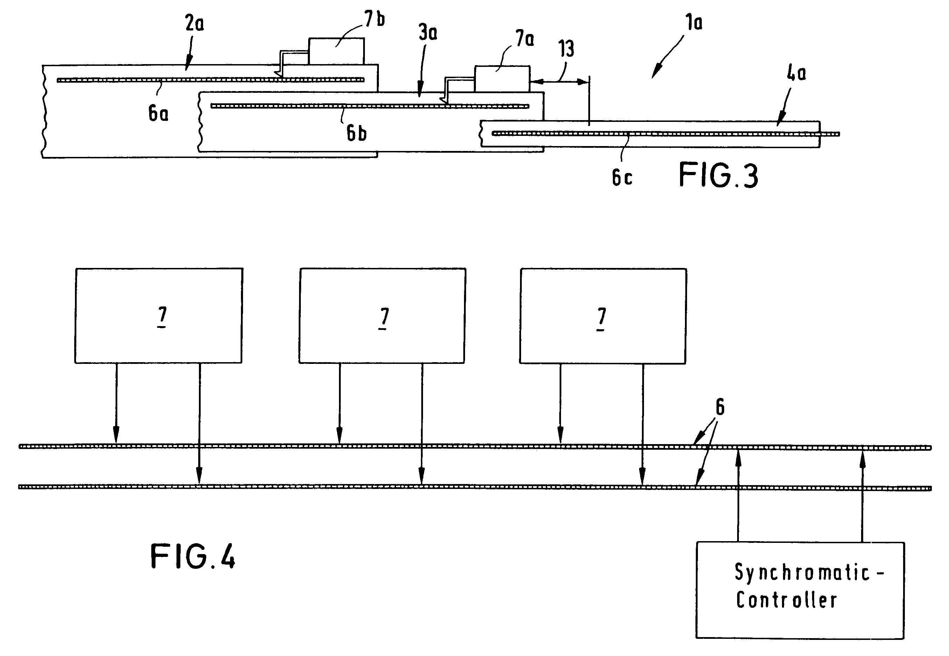

Im abgewandelten Ausführungsbeispiel gemäß Fig. 3 ist schematisch ein allgemein mit 1a bezeichneter Kranausleger dargestellt mit einem ersten ortsfesten Auslegerschuß 2a, einem ersten teleskopierbaren Auslegerschuß 3a sowie mit einem zweiten teleskopierbaren Auslegerschuß 4a.

Erkennbar weist jeder der Auslegerschüsse 3a bzw. 4a eine Stromversorgungs- und Datenübertragungsschiene 6b und 6c auf, die stationäre Übertragungsschiene im Auslegerschuß 2a ist mit 6a bezeichnet.

Beispielsweise über induktive Näherungsschalter oder Schleifleitungen od. dgl., die in Fig. 3 mit 7a bzw. 7b bezeichnet sind, können sowohl elektronische Informationen als auch eine elektrische Energie für einen nicht näher dargestellten Verbraucher über die Stromschienen 6a und 6b übertragen werden. Diese soll in Fig. 1 durch den Doppelpfeil 13 dargestellt sein.

In Fig. 4 ist die induktive Kopplung als Prinzip eines seriellen Bus-Systems dargestellt, d.h. Informationsdaten können induktiv in die Stromversorgungsschienen 6a, 6b, 6c etc. eingekoppelt bzw. ausgekoppelt werden. So kann über die Stromschiene 6a und 6b eine Datenübertragung seriell erfolgen, z.B. RS-232, RS-485, CRN oder eine entsprechend modifizierte Übertragungsform.

Wie bereits erwähnt, können die Stromschienen 6 etwa durch Löcher kodiert sein, um, wie im Stand der Technik beschrieben, auch die Längenmessung über entsprechende Impulse zu ermöglichen u. dgl. mehr.

Natürlich ist die beschriebene Erfindung in vielfacher Hinsicht abzuändern, ohne den Grundgedanken zu verlassen. So kann eine elektrische Kopplung auch anders als über Schleifleiter vorgesehen sein. Die elektrischen Leiterbahnen können als Stromschienen ausgebildet sein, je nach Bauweise können auch die Gehäuse der Teleskopausleger selbst dazu herangezogen werden oder aber auch die Ausfahrlängen der Schubhydraulik u. dgl. mehr.

## Patentansprüche

1. Verfahren zur Längenmessung von relativ zueinander verfahrbaren elektrischen Leitern, insbesondere von teleskopierbaren Kranauslegerschüssen,
dadurch gekennzeichnet,
daß die elektrischen Leiter, wie die Kranauslegerschüsse od. dgl., elektrisch leitend derart miteinander verbunden werden, daß sich für einen an einer definierten Stelle des Leiters aufgegebenen Spannungssprung ein durchgehender elektrischer Leiter bis zum Ende der Leitung ergibt, wobei nach Aufgabe des Spannungssprunges an der Aufgabenstelle die Rückkehr der Reflektion gemessen und über die Reflektionszeit die Länge des Leiters bestimmt wird.

2. Verfahren nach Anspruch 1 zur Messung der Teleskopierlänge von Kranauslegern,
dadurch gekennzeichnet,
daß als elektrischer Leiter an jedem Kranauslegerschuß eine elektrisch isolierte Leiterbahn herangezogen wird, wobei die Leiterbahn über Schleifleiter od. dgl. zu einer Gesamtleitung herangezogen und die Leitungslänge über die Reflektion eines Spannungssprunges gemessen wird.

3. Verfahren nach Anspruch 2,
dadurch gekennzeichnet,
daß die Reflektion sowohl bei unteleskopierten Auslegern als auch bei vollteleskopierten Auslegern gemessen wird, diese Meßdaten gespeichert und die Reflektionswerte bei jeder Zwischenausfahrlänge gemessen, mit den zuvor ermittelten Meßgrößen verglichen und zur Definition der Ausfahrlänge umgerechnet werden.

4. Vorrichtung zur Messung der Teleskopierlänge von Kranauslegern,
dadurch gekennzeichnet,
daß sie als auf jedem Kranauslegerschuß (2-5) angebrachte elektrisch isolierte Leiterbahn ausgebildet ist, wobei die Leiterbahnabschnitte (6) über Schleifleiter (7) elektrisch leitend miteinander verbunden sind, mit einem Generator (9) zur Erzeugung eines Spannungssprunges und einer Meßeinrichtung (10) und Auswerteinrichtung (11) zur Messung der Reflektionszeit und der Umrechnung in die entsprechende Teleskopierlänge.

5. Vorrichtung zum Übertragen von elektronischen Informationen an Teleskopauslegern von Kränen od. dgl.,
dadurch gekennzeichnet,
daß sie als auf jedem Teleskoparm (1-3) angebrachte Schiene (6a-6c) aus Leitermaterial gebildet ist mit einer elektrischen Kopplung von einer Schiene (6a-6c) auf dem einen Teleskoparm (1a-3a) zur jeweils benachbarten und schließlich zur Weiterleitung an eine Datenerfassungs- und/oder Übertragungs- und/oder Auswerteinrichtung.

6. Vorrichtung nach Anspruch 5,
dadurch gekennzeichnet,
daß die Schienen (6) als Stromversorgungsschienen für elektrische Verbraucher, wie Steuereinrichtungen od. dgl., und/ oder als Element einer Ausfahrlängenmeßeinrichtung an den Teleskoparmen (1a-3a) ausgebildet sind.

7. Vorrichtung nach einem der vorangehenden Ansprüche,
dadurch gekennzeichnet,
daß eine Einrichtung (7,7a,7b) zur seriellen Datenübertragung über die Stromschiene (6a-6c) vorgesehen ist.

8. Vorrichtung mit mechanischen oder elektronischen Markierungen an den Stromschienen,
dadurch gekennzeichnet,
daß Meßwertaufnehmer, beispielsweise Näherungsschalter (7a, 7b), vorgesehen sind zur Aufnahme von Impulsen bei Veränderung der Ausfahrlänge, wobei die aufgenommenen Impulse unmittelbar über die Stromschiene (6) selbst zur Verwertungseinrichtung leitbar sind.

9. Vorrichtung nach einem der vorangehenden Ansprüche,
dadurch gekennzeichnet,
daß Einkopplungs- und Auskopplunqseinrichtungen (7) an den Schienen (6) zur induktiven Übertragung von Informationsdaten über die Schienen vorgesehen sind.

## Claims

1. Process for measuring the length of electrical conductors movable relative to each other, especially of telescopic crane jib sections, characterised in that the electrical conductors, such as the crane jib sections or the like, are electrically interconnected in such a way that, for a given sudden voltage change at a defined position of the conductor, this produces a continuous electrical conductor up to the end of the line, whereby after the sudden voltage change has been fed to the feed point, the return reflection is measured and the length of the conductor is determined by means of the reflection time.

2. Process according to Claim 1 for measuring the telescopic length of crane jibs, characterised in that an electrically insulated track is used as an electrical conductor on each crane jib section, the track being made part of a complete line via contact conductors and the length of the line being measured by means of the reflection of a sudden voltage change.

3. Process according to Claim 2, characterised in that the reflection is measured both with the jibs retracted and with the jibs fully extended, these measurement data are stored and the reflection values at each intermediate extended length are measured, are compared to the previously determined measurement variables and converted for the definition of the extended length.

4. Device for measuring the telescopic length of crane jibs, characterised in that it is in the form of an electrically insulated track placed on each crane job section (2 - 5), whereby the track sections (6) are electrically interconnected via contact conductors (7), with a generator (9) for producing a voltage change and a measuring device (10) and evaluation device (11) for the measurement of the reflection time and the conversion into the corresponding telescopic length.

5. Device for the transmission of electronic data on telescopic jibs of cranes or the like, characterised in that it is in the form of a busbar (6a - 6c) of conductive material placed on each telescopic arm (1 - 3), with an electrical coupling from one busbar (6a - 6c) on the one telescopic arm (la - 3a) to the respective adjacent one, and finally for the transmission to a data acquisition and/or transmission and/or evaluation device.

6. Device according to Claim 5, characterised in that the busbars (6) are configured as power supply busbars for electrical loads, such as control devices and the like, and/or as an element of an extended length measuring device on the telescopic arms (1a - 3a).

7. Device according to one of the preceding Claims, characterised in that a device (7, 7a, 7b) is provided for serial data transmission via the busbars (6a - 6c).

8. Device with mechanical or electronic markings on the busbars, characterised in that measuring sensors, for example proximity switches (7a, 7b), are provided to pick up pulses when the extended length changes, whereby the recorded pulses can be transmitted directly via the busbar (6) itself to the operating device.

9. Device according to one of the preceding Claims, characterised in that coupling and decoupling devices (7), are provided on the busbars (6) for the inductive transmission of information data via the busbars.

## Revendications

1. Procédé pour la mesure des longueurs de conducteurs électriques mutuellement mobiles les uns par rapport aux autres, en particulier pour la mesure des longueurs d'éléments de bras de grues télescopiques,
caractérisé en ce
- que les conducteurs électriques - comme par exemple les éléments de bras de grues ou similaires - sont liés mutuellement, électroconducteurs, de manière à établir, en faveur d'un saut de tension appliqué à un endroit défini sur la ligne électrique, un conducteur électrique continu, ininterrompu jusqu'à l'extrémité de la ligne électrique, le retour de la réflexion du courant étant mesuré et la longueur du conducteur électrique étant déduite à l'aide du temps mis pour la réflexion, après l'arrêt du saut de tension à l'endroit de l'admission.

2. Procédé selon la revendication 1 pour le mesurage des longueurs télescopiques de bras de grues,
caractérisé en ce
- que, comme conductuer électrique à chaque élément de bras de grues, un tracé conductif isolé est établi, les tracés conductifs étant liés, au moyen d'une ligne de contact ou similaires, pour obtenir un tracé totale, continu, et la longueur du tracé conductif étant mesurée au moyen de la réflexion d'un saut de tension.

3. Procédé selon la revendication 2,
caractérisé en ce
- que la réflexion est mesurée aussi bien pour les bras de grues à l'état non-télescopé que pour les bras à l'état entièrement télescopé,
- que ces données de mesure sont mémorisées,
- que les valeurs de la réflexion sont mesurées à n'importe quelle longueur (même intermédiaire) de déploiement télescopique, pour être comparées avec les valeurs prises préalablement et pour être utilisées ainsi pour la définition de la longueur de déploiement télescopique.

4. Dispositif pour la mesure de la longueur télescopique de bras de grues,
caractérisé en ce
- qu'il est réalisé en forme d'un tracé conductuer (6) isolé, disposé sur chaque élément de bras télescopique (2-5), les tronçons du tracé conductuer (6) étant liés mutuellement au moyen de lignes de contact (7) électroconductives,
- qu'il est muni d'un générateur électromécanique (9) pour la production d'un saut de tension, d'un dispositif de mesurage (10) et d'un dispositif d'exploitation (11) des informations, pour mesurer le temps de la réflexion et pour le traduire en longueur télescopique correspondante.

5. Dispositif de transmission d'informations électroniques pour des bras télescopiques de grues ou similaires,
caractérisé en ce
- qu'il est réalisé en forme d'un rail conducteur (6a-6c) disposé sur chaque bras télescopique (1-3),
- qu'il est muni d'un couplage électrique liant un rail conducteur (6a-6c) disposé sur un bras télescopique (1a-3a) au rail voisin, et transmettant les informations électroniques à un dispositif d'enregistrement d'informations et/ou un dispositif de transmission d'informations et/ou un dispositif d'exploitation d'informations.

6. Dispositif selon la revendication 5,
caractérisé en ce
- que les rails conducteurs (6) sont réalisés en forme de rails d'alimentation en courant électrique pour récepteurs de courant, comme par exemple des appareils de commande ou similaires, et/ou en forme d'un élément d'un dispositif de mesurage pour la gradation du déploiement des bras télescopiques (1a-3a).

7. Dispositif selon l'une des revendications précédentes,
caractérisé en ce
- qu'est prévu un dispositif de transmission sérielle d'informations (7,7a,7b) au moyen du rail conducteur (6a-6c).

8. Dispositif avec repères mécaniques ou électroniques sur les rails conducteurs,
caractérisé en ce
- que des enregistreurs d'informations, par exemple des détecteurs de proximité (7a,7b), sont prévus, pour la réception d'impulsions lors d'un changement de la longueur du déploiement télescopique, les impulsions reçues étant conduites directement au dispositif d'exploitation d'informations par le rail conducteur (6) lui-même.

9. Dispositif selon l'une des revendications précédentes,
caractérisé en ce
- que des dispositifs de couplage et de découplage (7) sont prévus sur les rails conducteurs (6), pour la transmission inductive d'informations par les rails conducteurs.
